# EUROPÄISCHE PATENTSCHRIFT

(11) **EP 1 626 627 B1**
(45) Veröffentlichungstag und Bekanntmachung des Hinweises auf die Patenterteilung: **26.03.2008**
(21) Anmeldenummer: 04723984.3
(22) Anmeldetag: 29.03.2004
(51) Int. Cl.: A22C 13/00

(54) **MIT NAHRUNGSMITTELZUSATZSTOFF IMPRÄGNIERTER TEXTILDARM**
TEXTILE SKIN IMPREGNATED WITH FOOD ADDITIVE
BOYAU TEXTILE IMPREGNE D'UN ADDITIF ALIMENTAIRE

(30) Priorität: 31.03.2003 DE 10314699
(43) Veröffentlichungstag der Anmeldung: 22.02.2006
(73) Patentinhaber: Kalle GmbH, 65203 Wiesbaden (DE)
(72) Erfinder: AUF DER HEIDE, Christian, 49080 Osnabrück (DE); AUF DER HEIDE, Dirk, 49594 Alfhausen (DE); KASTL, Erna, 65510 Hünstetten (DE); KÖNIG, Martina, 65207 Wiesbaden (DE); KALLWEIT, Jürg-Heinrich, 49076 Osnabrück (DE)
(74) Vertreter: Plate, Jürgen
(86) Internationale Anmeldenummer: PCT/EP2004/003292
(87) Internationale Veröffentlichungsnummer: WO 2004/086871

(56) Entgegenhaltungen:
- DE-A- 2 330 774
- DE-A- 3 704 563
- DE-A- 3 930 834
- DE-A- 4 123 745
- DE-U- 20 016 992
- DE-U- 29 511 713

## Beschreibung

Die Erfindung betrifft eine schlauchförmige Nahrungsmittelhülle, die ein Material umfaßt, das Farb- und/oder Aromastoffe aufnehmen kann, welche dann auf ein in der Hülle befindliches Nahrungsmittel übertragen werden können. Sie betrifft daneben ein Verfahren zur Herstellung der Hülle und ihre Verwendung.

Nahrungsmittelhüllen, speziell künstliche Wursthüllen, die auf das Nahrungsmittel bzw. das Wurstbrät übertragbare Stoffe enthalten, sind bereits bekannt. So sind in der WO 98/31731 und der EP-A 986 957 Folien offenbart, die auf der dem Nahrungsmittel zugewandten Seite eine Schicht aufweisen, die eine Geschmacks- oder Aromakomponente enthält sowie ein Polysaccharid oder Protein als Bindemittel. Die Trägerschicht der Folien besteht aus Polyolefin, Polyamid, Polyester, Polyvinylidenchlorid (PVDC), Polyvinylchlorid (PVC) oder Polystyrol.

In der JP-A 139401/2000 ist eine Folie beschrieben, mit der sich Nahrungsmittelfarbe auf Wurstbrät, Schinken oder ähnliche Lebensmittel übertragen läßt. Erreicht wird das mit einer Beschichtung, die neben dem Lebensmittelfarbstoff noch einen eßbaren Weichmacher, wie Glycerin, Sorbit oder Propylenglykol, enthält.

Gegenstand der EP-A 992 194 (= DE-A 198 46 305) ist eine Barrierehülle aus einem Kunststoffmaterial, wobei die Hülle auf der Innenseite mit einer Lage aus einem saugfähigen, mit Farb- oder Aromastoffen getränkten Material (Gewebe, Gewirke oder Gestricke) ausgekleidet ist. Beim Kochen oder Brühen werden die Farb- oder Aromastoffe auf das von der Hülle umschlossene Lebensmittel übertragen. Die Verbindung der Innenlage mit der benachbarten Lage der Hülle erfolgt allgemein durch einen Kleber. Die Barrierehülle selbst besteht beispielsweise aus Polyamid- und Polyethylenschichten. Sie wird im allgemeinen aus einer entsprechenden Flachfolie durch Heißsiegeln oder Kleben hergestellt und sorgt für die mechanische Stabilität. Ein starker Nachteil dieser Hülle besteht darin, daß sie sich nicht vollständig abziehen läßt, d.h. daß Teile der Innenlage auf dem Lebensmittel zurückbleiben. Die Ursache wird in einer nicht ausreichend mechanisch stabilen Verbindung zwischen dem Kunststoffmaterial und der textilen Innenlage gesehen.

Bereits beschrieben sind auch schlauchförmige Nahrungsmittelhüllen auf Cellulosebasis, die auf der dem Lebensmittelmittel zugewandten Seite Raucharoma und/oder Gewürze tragen. Diese Hüllen haben eine hohe Durchlässigkeit für Wasserdampf und Sauerstoff. Ein in der Hülle befindliches Nahrungsmittel trocknet daher relativ schnell aus und ist nur kurze Zeit haltbar.

All die bekannten Hüllen mit Innenlagen oder Innenbeschichtungen, die einen übertragbaren Nahrungsmittelzusatzstoff enthalten, haben meist den Nachteil, daß entweder ihre Herstellung technisch sehr aufwendig ist, daß sie die Nahrungsmittelzusatzstoffe nicht in ausreichender Menge übertragen können oder daß sie teilweise schlecht abziehbar sind.

Ausgehend von der EP-A 992 194 als nächstgelegenem Stand der Technik bestand die Aufgabe darin, eine Hülle mit übertragbaren Farb- und/oder Aromastoffen zur Verfügung zu stellen, die
- einfach herstellbar ist,
- eine genügende Menge an Farb- Aroma- und/oder Geschmacksstoffen aufnehmen und auf ein in der Hülle befindliches Nahrungsmittel übertragen kann,
- sich vollständig und ohne Delamination wieder von Lebensmittel entfernen läßt,
- eine definiert einstellbare Sauerstoff- und Wasserdampfdurchlässigkeit aufweist und
- für Koch-, Brüh- oder Rohwurstwürste verwendbar ist.

Lösen läßt sich die Aufgabe mit einer Textilhülle, die die Farb-, Aroma- und/oder Geschmacksstoffe direkt speichert und an ein darin befindliches Nahrungsmittel abgeben kann. Anders als in der genannten EP-A sorgt das Textilmaterial gleichzeitig für die mechanische Stabilität der Hülle.

Gegenstand der vorliegenden Erfindung ist demgemäß eine schlauchförmige Nahrungsmittelhülle, die ein Material umfaßt, das Farb-, Aroma- und/oder Geschmacksstoffe aufnehmen kann, welche dann auf ein in der Hülle befindliches Nahrungsmittel übertragen werden können, dadurch gekennzeichnet, daß die Nahrungsmittelhülle eine Textilhülle ist, deren textiles Grundmaterial die Farb-, Aroma- und/oder Geschmacksstoffe aufnehmen, speichern und wieder abgeben kann. In einer bevorzugten Ausführungsform weist die Textilhülle eine Längsnaht auf.

Die Textilhülle kann aus einem Gewebe, Gewirke, Fadengelege oder Vliesstoff oder Spinnvlies oder auf eine andere Weise aus einem textilen Grundmaterial hergestellt sein. Es kann aus Naturfasern, wie Baumwolle, Leinen, Seide oder Wolle, aus modifizierten Naturfasern, wie Zellwollfasern, aus Chemiefasern, wie Polyesterfasern oder Polyamidfasern oder aus beliebigen Mischungen davon bestehen. Wichtig ist allein, daß es die jeweiligen Farb-, Aroma- und/oder Geschmacksstoffe aufnehmen, speichern und wieder abgeben kann. Das textile Grundmaterial hat allgemein ein Flächengewicht von 25 bis 150 g/m², bevorzugt von 50 bis 110 g/m².

Farb-, Aroma- und/oder Geschmacksstoffe können eine flüssige Konsistenz haben. Das oben genannte Material ist daher bevorzugt saugfähig, so daß es mit den Farb-, Aroma- und/oder Geschmacksstoffen getränkt werden kann. Sie können aber auch eine feste Konsistenz haben. Bevorzugt sind Flüssigrauch, Grillaroma, Gewürze oder Gewürzextrakte (beispielsweise Pfeffer, Koriander, Curry oder Paprika oder Paprikageschmack), Zimt, Caramel, Fruchtaromen, Marinaden oder ähnliches. Er kann zusätzlich eine konservierende Wirkung auf das Lebensmittel haben. Das gilt insbesondere für den Flüssigrauch. Es können auch mehrere feste und/oder flüssige Stoffe miteinander kombiniert werden.

Gegebenfalls sind die Farb-, Aroma- und/oder Geschmacksstoffe darüber hinaus kombiniert mit einem Bindemittel oder einem Bindemittelgemisch. Das Bindemittel ist beispielsweise ein Protein oder ein Polysaccharid. Geeignete Bindemittel sind insbesondere Cellulosederivate, insbesondere Ether oder Ester der Cellulose, wie Carboxymethylcellulose (CMC), Hydroxymethylcellulose, Hydroxypropylcellulose, Hydroxypropylmethylcellulose, Alginsäure und/oder Alginat, Chitosan, Pektin, Carrageenan oder Stärke oder Stärkederivate, sowie Proteine, wie Albumin, Casein, Zein, Weizenprotein, Sojaprotein oder Erbsenprotein. Das Bindemittel wird dabei entsprechend der Art des textilen Grundmaterials der Hülle und der Art des Farb-, Aroma- und/oder Geschmacksstoffs ausgewählt. Mit Hilfe dieser Stoffe lassen sich zudem die Haft- und Trenneigenschaften der Hülle an das jeweilige Nahrungsmittel gezielt anpassen. Die Haftung soll allgemein so stark sein, daß sich die Hülle beim Reifen bzw. Lagern nicht ablöst ("abstellt"), andererseits so schwach, daß sie sich problemlos abziehen läßt ohne daß dabei Nahrungsmittelbestandteile haften bleiben. Farb-, Aroma- und/oder Gewürzstoffe und Bindemittel können gleichzeitig, gegebenenfalls in Form einer Mischung, oder aber nacheinander aufgetragen werden.

Wegen ihrer hohen Wasserdampfdurchlässigkeit ist die erfindungsgemäße Hülle besonders für die Herstellung von Rohwurst geeignet. Sie kann jedoch auch zur Herstellung von Koch- oder Brühwurst eingesetzt werden. In diesem Fall sollte sie zusätzlich mindestens eine Außenbeschichtung aufweisen, die die Wasserdampf- und Sauerstoffdurchlässigkeit effektiv vermindert. Sie umfaßt beispielsweise ein Acrylatharz und/oder ein Polyvinylidenchlorid(PVDC)-Harz. Eine Hülle, die allein mit Acrylatharz beschichtet ist, hat den Vorteil, daß sie noch räucherfähig ist. Für eine Wasserdampf-Sperrschicht geeignet sind allgemein Polymere, die Einheiten von mindestens einem der folgenden Monomeren enthalten: Acrylate, Methacrylate, Vinylacetat, Vinylalkohol, Ethylen, Butadien, Styrol, Acrylsäure, Methacrylsäure, Acrylamid und/oder Acrylnitril. Bei der Herstellung der Außenbeschichtung wird die Auftragsmenge so gewählt, daß die textile Struktur der Hülle noch erkennbar ist. Die Beschichtung hat daher (nach dem Trocknen) allgemein ein Gewicht von bis zu 150 g/m². Bei der Rohwurstanwendung beträgt das Schichtgewicht bevorzugt bis zu 30 g/m², bei der Brüh- und Kochwurstanwendung 30 bis 150 g/m². Die polymeren Beschichtungen füllen also im wesentlichen nur die Lücken in dem textilen Grundmaterial. Auch in dieser Ausführungsform ist die Hülle demnach einschichtig, so daß keine Delaminierungsprobleme entstehen können. Die erfindungsgemäße Hülle ohne eine solche Außenbeschichtung oder mit einer wasserdampfdurchlässigen Beschichtung weist allgemein eine Wasserdampfdurchlässiglzeit von mehr als 150 g/m² d, bevorzugt 300 bis 800 g/m²·d, besonders bevorzugt von 400 bis 500 g/m²·d, auf. In der beschichteten Ausführungsform für Koch- und Brühwurst beträgt die Wasserdampfdurchlässigkeit allgemein bis zu 150 g/m²·d, bevorzugt bis zu 100 g/m²·d und für Hochbarriereanforderungen bis zu 5 g/m²·d. Durch die zusätzliche Beschichtung kann sich zudem die Bedruckbarkeit der erfindungsgemäßen Nahrungsmittelhülle verbessern. Bei einer Hülle, die für Rohwurst vorgesehen ist, kann dieser Effekt durch entsprechend durchlässige Beschichtungen erreicht werden.

Die Herstellung der erfindungsgemäßen Hülle erfolgt nach Verfahren, die dem Fachmann geläufig sind. Als Ausgangsmaterial dient in der Regel eine Textil-Flachbahn. Gegebenenfalls wird die Flachbahn auf einer Seite mit mindestens einer Schicht versehen, die als Wasserdampf- und/oder Sauerstoffbarriere wirkt. Auch nach einer Beschichtung soll der textile Charakter erkennbar bleiben. Die Beschichtung ist daher entsprechend dünn zu wählen. Zweckmäßig füllt das Beschichtungsmaterial nur die Zwischenräume zwischen den Textilfasern aus. Auf diese Flachbahn werden die vorgesehenen Farb-, Aroma- und/oder Geschmacksstoffe aufgebracht. Entsprechend deren Viskosität kann das beispielsweise durch Besprühen, Bedrucken, Tauchen oder durch Antragen mit Hilfe eines Rakels geschehen. Körnige oder stückige Nahrungsmittelzusatzstoffe (Pfefferkörner, grob gemahlener Pfeffer oder ähnliches) werden allgemein aufgestreut. In diesem Fall wird zweckmäßig vorher eine Bindemittelschicht aufgetragen und/oder die körnigen oder stückigen Nahrungsmittelzusatzstoffe werden vor dem Auftrag mit einem Bindemittel oder Bindemittelgemisch kombiniert. Die Farb-, Aroma- und/oder Geschmacksstoffe können auch in vorbestimmter Weise, z.B. in einem vorbestimmten Muster (z.B. in senkrecht, parallel oder schräg zur Bahnrichtung verlaufenden Streifen) aufgebracht werden.

Die mit dem Nahrungsmittelzusatzstoff imprägnierte textile Flachbahn wird dann, soweit erforderlich, auf die passende Breite zurechtgeschnitten, zu einem Schlauch geformt, beispielsweise mit Hilfe einer Formschulter, und dann mit einer Naht fixiert. Die Naht selbst kann durch Nähen, Kleben, Siegelbandschweißen oder nach einem anderen Fügeverfahren erzeugt werden.

Alternativ dazu kann das gegebenenfalls beschichtete bahnförmige Textilmaterial - soweit erforderlich nach dem Zuschneiden auf die passende Breite - zu einem Schlauch geformt werden, der dann mit einer Längsnaht fixiert wird nach einem der oben angegebenen Verfahren. Die Hülle wird jedoch "linksseitig" geklebt, so daß sich eine gegebenenfalls vorhandene Beschichtung auf der Innenseite befindet. Die Hülle wird dann mit den Farb-, Aroma- und/oder Geschmacksstoffen behandelt. Sie kann beispielsweise durch eine Tränkwanne geführt werden, die mit einer Flüssigrauch-Zusammensetzung oder einer anderen wäßrigen Zusammensetzung gefüllt ist. Soweit notwendig, wird die Hülle dann getrocknet, beispielsweise mit Heißluft. Anschließend wird sie gewendet, damit die Farb-, Aroma- und/oder Geschmacksstoffe auf die Innenseite gelangen und später übertragen werden können. In einer Abwandlung des Verfahrens werden rechtsseitig geklebte Hüllen auf der Innenseite mit den Farb-, Aroma- und/oder Geschmacksstoffen getränkt bzw. benetzt mit Hilfe einer Flüssigkeitsblase, die durch das Innere hindurchgeführt wird.

In einer weiteren Ausführungsform wird eine nahtlose Textilhülle eingesetzt, wie sie beispielsweise mit Hilfe einer Rundstrickmaschinen hergestellt werden kann. Je nach der vorgesehenen Verwendung kann die nahtlose Hülle auf der Außenseite beschichtet werden, beispielsweise mit einer Barriereschicht. Der Farb-, Aroma- und/oder Geschmacksstoff wird, beispielsweise mit Hilfe der bereits beschriebenen Flüssigkeitsblase, auf die Innenseite der Hülle aufgebracht.

Die schlauchförmige Nahrungsmittelhülle kann auf übliche Art konfektioniert werden. Sie kann beispielsweise abschnittsweise zu Raupen gerafft oder zu einseitig verschlossenen (in der Regel abgebundenen) Abschnitten verarbeitet werden.

Der entscheidende Vorteil der erfindungsgemäßen Hülle gegenüber der bekannten Hülle mit einer Kunststofflage und einer innenliegenden textilen Schicht besteht darin, daß sie einlagig ist so daß die beschriebenen Delaminierungsprobleme beseitigt sind. Wenn die Hülle abgezogen ist, verbleiben daher keine Textilreste auf dem Wurstbrät. Die erfindungsgemäße Hülle kann nicht nur als künstliche Wursthülle für Roh-, Brüh- und Kochwurst verwendet werden, sondern auch zur Umhüllung von Käse. Der Käse bzw. dessen Oberfläche läßt sich so veredeln.

Die nachfolgenden Beispiele dienen zur Illustration der Erfindung. Prozente sind darin Gewichtsprozente, soweit nicht anders angegeben oder aus dem Zusammenhang ersichtlich.

### Beispiel 1: (Kochwursthülle)

Auf ein bahnförmiges Textilmaterial aus Baumwollgewebe mit einer Breite von etwa 100 cm und einem Gewicht von 100 g/m² wurde mit Hilfe eines Rakels zunächst eine Acrylatschicht aufgebracht. Die Acrylatschicht hatte nach dem Trocknen bei 150 °C ein Gewicht von 50 g/m². Auf die Acrylatschicht wurde dann noch eine Barriereschicht aus einer PVDC-Dispersion aufgebracht. Die Barriereschicht hatte nach dem Trocknen ein Gewicht von 10 g/m².

Das beschichtete Textilmaterial wurde dann so zurechtgeschnitten, daß Bahnen entstanden, aus denen sich nach Übereinanderlegen der Längskanten eine schlauchförmige Hülle mit einem Durchmesser von 54 mm (= Kaliber 54) ergab. Die Hülle wurde linksseitig geklebt, so daß sich die Barriere- und die Acrylatschicht auf der Innenseite befanden. Als Kleber wurde ein Polyurethankleber verwendet.

Die Hülle wurde dann durch ein Tauchbad geführt, wo sie mit einer Flüssigrauch-Zusammensetzung beaufschlagt wurde. Die Zusammensetzung bestand aus:

| | |
|---|---|
| 68 % | Flüssigrauch mit einem pH-Wert von etwa 7 (erhältlich von Zesti Smoke), |
| 30 % | Wasser, |
| 1,0 % | Alginat, |
| 0,9 % | Kieselerde und |
| 0,1 % | Citral |

Die beschichtete Hülle durchlief dann eine Trockenstrecke. Anschließend wurde sie gewendet und zu einer Raupe aufgestockt.

Sie wurde dann mit Kochwurstbrät gefüllt, portioniert und die Enden der einzelnen Würste mit Metall-Clips verschlossen. Der Kochprozeß erfolgte dann bei 75 °C (Kerntemperatur im Innern der Wurst: 72 °C) für die Dauer von etwa 65 min. Nach dem Abkühlen wurde die Hülle abgeschält. Das Kochwurstbrät zeigte den gewünschten gleichmäßigen Räucherrand und intensiven Räuchergeschmack.

### Beispiel 2: (Brühwursthülle)

Beispiel 1 wurde wiederholt mit der Abweichung, daß das Tauchbad folgende Zusammensetzung aufwies:

| | |
|---|---|
| 20 % | Cuny-Gewürzpulver, |
| 2 % | Alginat, |
| 2 % | Stärke, |
| 1 % | Schellack (20 %ig in 1 M NaOH gelöst) und |
| 75 % | Wasser |

Die Hülle wurde dann wie oben beschrieben gewendet und mit Geflügelschinkenwurst -Brät gefüllt. Die Wurst wurde dann gebrüht (78 °C, 70 min) und abgekühlt. Nach dem Abziehen der Hülle zeigte die Oberfläche des Wurstbräts einen einheitlichen Curryrand.

### Beispiel 3: (Rohwursthülle)

Auf ein bahnförmiges Textilmaterial aus Baumwollgewebe mit einer Breite von etwa 100 cm und einem Gewicht von 100 g/m² wurde mit Hilfe eines Rakels eine Acrylatschicht aufgebracht, die nach dem Trocknen bei 150 °C ein Gewicht von 30 g/m² hatte. Das beschichtete Textilmaterial wurde dann so zurechtgeschnitten, daß Bahnen entstanden, aus denen sich nach Übereinanderlegen der Längskanten eine schlauchförmige Hülle mit einem Durchmesser von 54 mm ergab. Die Hülle wurde linksseitig geklebt, so daß sich die Acrylatschicht auf der Innenseite befand. Als Kleber wurde ein Polyurethankleber verwendet.

Die Hülle wurde dann durch ein Tauchbad geführt, wo sie mit einer Flüssigrauch-Zusammensetzung beaufschlagt wurde, die aus

| | |
|---|---|
| 82 % | eines sauren Flüssigrauchs (erhältlich von Red Arrow Corp.), |
| 15 % | eines sauren Flüssigrauchs "Enviro Gold'n'Brown (Red Arrow Corp.) und |
| 3 % | Glycerin |

bestand. Die Hülle wurde getrocknet, gewendet und zu einer Raupe aufgestockt. Sie wurde mit Rohwurstbrät gefüllt und 21 Tage bei 24 °C am Anfang und 16 °C am Ende der 21 Tage und etwa 92 % relativer Luftfeuchte am Anfang der 21 Tage und etwa 75 % relativer Luftfeuchte am Ende der 21 Tage gereift. Nach dem Abschälen der Hülle hatte das Brät den gewünschten intensiven Räuchergeschmack.

## Patentansprüche

1. Schlauchförmige Nahrungsmittelhülle, die ein Material umfaßt, das Farb-, Aroma- und/oder Geschmacksstoffe aufnehmen kann, welche dann auf ein in der Hülle befindliches Nahrungsmittel übertragen werden können, **dadurch gekennzeichnet, daß** die Nahrungsmittelhülle eine Textilhülle ist, deren textiles Grundmaterial die Farb-, Aroma- und/oder Geschmacksstoffe aufnehmen, speichern und wieder abgeben kann.

2. Nahrungsmittelhülle gemäß Anspruch 1, **dadurch gekennzeichnet, daß** die Textilhülle eine Längsnaht aufweist.

3. Nahrungsmittelhülle gemäß Anspruch 1 oder 2, **dadurch gekennzeichnet, daß** das Material saugfähig ist, so daß es mit Farb-, Aroma- und/oder Geschmacksstoffen getränkt werden kann.

4. Nahrungsmittelhülle gemäß einem oder mehreren der Ansprüche 1 bis 3, **dadurch gekennzeichnet, daß** das Material aus Naturfasern, bevorzugt Baumwolle, Leinen, Seide, Wolle, aus modifizierten Naturfasern, bevorzugt Zellwollfasern, aus Chemiefasern, bevorzugt Polyesterfasern oder Polyamidfasern, oder Mischungen dieser Fasern besteht.

5. Nahrungsmittelhülle gemäß einem oder mehreren der Ansprüche 1 bis 4, **dadurch gekennzeichnet, daß** sie ein Flächengewicht von 25 bis 300 g/m², bevorzugt von 60 bis 160 g/m², aufweist.

6. Nahrungsmittelhülle gemäß einem oder mehreren der Ansprüche 1 bis 5, **dadurch gekennzeichnet, daß** der Farb-, Aroma- und/oder Geschmacksstoff ein Flüssigrauch, ein Grillaroma, ein Gewürz oder ein Gewürzextrakt, bevorzugt Pfeffer, Koriander, Curry oder Paprika oder Paprikageschmack, Zimt, Caramel, ein Fruchtaroma oder eine Marinade ist.

7. Nahrungsmittelhülle gemäß einem oder mehreren der Ansprüche 1 bis 6, **dadurch gekennzeichnet, daß** der Farb-, Aroma- und/oder Geschmacksstoff kombiniert ist mit einem Bindemittel oder einem Bindemittelgemisch.

8. Nahrungsmittelhülle gemäß Anspruch 7, **dadurch gekennzeichnet, daß** das Bindemittel ein Protein, bevorzugt Albumin, Casein, Zein, Weizenprotein, Sojaprotein oder Erbsenprotein, oder ein Polysaccharid oder ein Derivat davon, bevorzugt ein Cellulose-ether und/oder-ester, Alginsäure und/oder Alginat, Chitosan, Pektin, Carrageenan oder Stärke oder Stärkederivate, umfaßt.

9. Nahrungsmittelhülle gemäß einem oder mehreren der Ansprüche 1 bis 8, **dadurch gekennzeichnet, daß** sie mindestens eine Außenbeschichtung aufweist.

10. Nahrungsmittelhülle gemäß Anspruch 9, **dadurch gekennzeichnet, daß** die Außenbeschichtung als Wasserdampf- und/oder Sauerstoffbarriere wirkt.

11. Nahrungsmittelhülle gemäß Anspruch 9, **dadurch gekennzeichnet, daß** die Außenbeschichtung ein Acrylatharz und/oder ein Polyvinylidenchlorid-(PVDC)-Harz umfaßt.

12. Nahrungsmittelhülle gemäß Anspruch 9, **dadurch gekennzeichnet, daß** für die Außenbeschichtung Polymere mit Einheiten von mindestens einem der folgenden Monomere Acrylate, Methacrylate, Vinylacetat, Vinylalkohol, Ethylen, Butadien, Styrol, Acrylsäure, Methacrylsäure, Acrylamid und/oder Acrylnitril verwendet werden.

13. Nahrungsmittelhülle gemäß Anspruch 9, **dadurch gekennzeichnet, daß** die Beschichtung (nach dem Trocknen) ein Gewicht von bis 150 g/m² hat.

14. Nahrungsmittelhülle gemäß einem oder mehreren der Ansprüche 8 bis 13, **dadurch gekennzeichnet, daß** die Hülle für Rohwurstanwendungen eine Wasserdampfdurchlässigkeit von mehr als 150 g/m²·d, und für Brühwurst- und Kochwurstanwendungen bis zu 150 g/m²·d aufweist.

15. Nahrungsmittelhülle gemäß einem oder mehreren der Ansprüche 1 bis 14, **dadurch gekennzeichnet, daß** die Längsnaht durch Nähen, Kleben und/oder durch Siegelbandschweißen hergestellt ist.

16. Verfahren zur Herstellung einer Nahrungsmittelhülle gemäß einem oder mehreren der Ansprüche 1 bis 15, **dadurch gekennzeichnet, daß**
- ein bahnförmiges, textiles Flachmaterial bereitgestellt wird,
- das Flachmaterial gegebenenfalls auf einer Seite mit mindestens einer Schicht versehen wird, die als Wasserdarmpf- und/oder Sauerstoffbarriere wirkt,
und anschließend entweder
a)
- auf eine die Seite des Flachmaterials, die nicht mit einer Barriereschicht versehen ist, mindestens ein Farb-, Aroma- und/oder Geschmacksstoff aufgebracht wird, der aufgenommen, gespeichert und wieder abgegeben werden kann,
- das Flachmaterial gegebenenfalls auf die passende Breite zugeschnitten wird,
- das Flachmaterial zu einem Schlauch mit überlappenden Längskanten geformt wird, wobei sich der Farb-, Aroma- und/oder Geschmacksstoff auf der Innenseite des Schlauches befindet, und
- die überlappenden Kanten mit einer Längsnaht fixiert werden
oder
b)
- das gegebenenfalls beschichtete Flachmaterial zu einem Schlauch mit überlappenden Längskanten geformt wird, wobei sich die als Wasserdampf- und/oder Sauerstoffbarriere wirkende Schicht auf der Innenseite des Schlauches befindet,
- die überlappenden Längskanten mit einer Naht fixiert werden,
- auf die Außenseite des Schlauchs mindestens einen Farb-, Aroma- und/oder Geschmacksstoff aufgebracht wird, der aufgenommen, gespeichert und wieder abgegeben werden kann und
- der Schlauch gewendet wird.

17. Verfahren gemäß Anspruch 16, **dadurch gekennzeichnet, daß** der Farb-, Aroma- und/oder Geschmacksstoff ein fester, bevorzugt körniger oder stückiger, Nahrungsmittelzusatzstoff ist, der vor dem Auftrag mit einem Bindemittel oder Bindemittelgemisch kombiniert wird.

18. Verwendung der Nahrungsmittelhülle gemäß einem der Ansprüche 1 bis 15 für Roh-, Brüh- oder Kochwurst oder zur Verpackung von Käse.

## Claims

1. A tubular food casing which comprises a material which can absorb dyes, aroma substances and/or flavorings which can then be transferred to a food situated in the casing, wherein the food casing is a textile casing, which basic material can absorb, store and transfer dyes, aroma substances and/or flavorings.

2. The food casing as claimed in claim 1, wherein the textile casing has a longitudinal seam.

3. The food casing as claimed in claim 1 or 2, wherein the material is absorbent, so that it can be impregnated with dyes, aroma substances and/or flavorings.

4. The food casing as claimed in one or more of claims 1 to 3, wherein the material consists of natural fibers, preferably cotton, linen, silk, wool, of modified natural fibers, preferably viscose staple fibers, of synthetic fibers, preferably polyester fibers or polyamide fibers, or of mixtures of these fibers.

5. The food casing as claimed in one or more of claims 1 to 4, wherein it has a weight per unit area of 25 to 300 g/m², preferably of 60 to 160 g/m².

6. The food casing as claimed in one or more of claims 1 to 5, wherein the dye, aroma substance and/or flavoring is a liquid smoke, a grill aroma, a spice or a spice extract, preferably pepper, coriander, curry or paprika, or paprika flavor, cinnamon, caramel, a fruit aroma or a marinade.

7. The food casing as claimed in one or more of claims 1 to 6, wherein the dye, aroma substance and/or flavoring is combined with a binder or a binder mixture.

8. The food casing as claimed in claim 7, wherein the binder comprises a protein, preferably albumin, casein, zein, wheat protein, soybean protein or pea protein, or a polysaccharide or a derivative thereof, preferably a cellulose ether and/or cellulose ester, alginic acid and/or alginate, chitosan, pectin, carrageenan or starch or starch derivatives.

9. The food casing as claimed in one or more of claims 1 to 8, wherein it has at least one outer coating.

10. The food casing as claimed in claim 9, wherein the outer coating acts as water vapor barrier and/or oxygen barrier.

11. The food casing as claimed in claim 9, wherein the outer coating comprises an acrylic resin and/or a poly(vinylidene chloride) (PVDC) resin.

12. The food casing as claimed in claim 9, wherein, for the outer coating, use is made of polymers having units of at least one of the following monomers acrylates, methacrylates, vinyl acetate, vinyl alcohol, ethylene, butadiene, styrene, acrylic acid, methacrylic acid, acrylamide and/or acrylonitrile.

13. The food casing as claimed in claim 9, wherein the coating (after drying) has a weight of up to 150 g/m².

14. The food casing as claimed in one or more of claims 8 to 13, wherein the casing, for raw sausage applications, has a water vapor permeability of greater than 150 g/m²·d, and for scalded-emulsion sausage applications and cooked-meat emulsion sausage applications, up to 150 g/m²·d.

15. The food casing as claimed in one or more of claims 1 to 14, wherein the longitudinal seam is produced by sewing, gluing, and/or by sealing tape welding.

16. A method for producing a food casing as claimed in one or more of claims 1 to 15, which comprises
- preparing a sheet-like textile flat material,
- providing the flat material if appropriate on one side with at least one layer which acts as water vapor barrier and/or oxygen barrier,
and, thereafter, either
a)
- applying, to one side of the flat material which is not provided with a barrier layer, at least one dye, aroma substance and/or flavoring, which can be absorbed, stored and transferred,
- trimming the flat material if appropriate to the correct width,
- shaping the flat material to form a tube having overlapping longitudinal edges, the at least one dye, aroma substance and/or flavoring being situated on the inside of the tube, and
- fixing the overlapping edges by a seam,
or, alternatively,
b)
- shaping the if appropriate coated flat material to form a tube having overlapping longitudinal edges, the layer acting as water vapor barrier and/or oxygen barrier being situated on the inside of the tube,
- fixing the overlapping longitudinal edges by a seam,
- applying to the outside of the tube at least one dye, aroma substance and/or flavoring, which can be absorbed, stored and transferred, and
- inverting the tube.

17. The method as claimed in claim 16, wherein the dye, aroma substance and/or flavoring is a solid, preferably granular or piece-form, food additive which, before the application, is combined with a binder or a binder mixture.

18. The use of the food casing as claimed in one of claims 1 to 15 for raw sausage, scalded-emulsion sausage or cooked-meat emulsion sausage or for packaging cheese.

## Revendications

1. Enveloppe en forme de boyau pour produit alimentaire, qui comprend un matériau pouvant absorber des colorants, arômes et/ou agents de sapidité qui peuvent alors être transférés sur un produit alimentaire présent dans l'enveloppe, **caractérisée en ce que** l'enveloppe pour produit alimentaire est une enveloppe textile dont le matériau textile de base peut absorber, emmagasiner et libérer à nouveau les colorants, arômes et/ou agents de sapidité.

2. Enveloppe pour produit alimentaire selon la revendication 1, **caractérisée en ce que** l'enveloppe textile présente un joint longitudinal.

3. Enveloppe pour produit alimentaire selon la revendication 1 ou 2, **caractérisée en ce que** le matériau est absorbant, de sorte qu'il peut être imprégné avec des colorants, des arômes et/ou des agents de sapidité.

4. Enveloppe pour produit alimentaire selon une ou plusieurs des revendications 1 à 3, **caractérisée en ce que** le matériau est constitué de fibres naturelles, de préférence de coton, lin, soie, laine, de fibres naturelles modifiées, de préférence de fibres de fibranne, de fibres synthétiques, de préférence de fibres de polyester ou de fibres de polyamide, ou de mélanges de ces fibres.

5. Enveloppe pour produit alimentaire selon une ou plusieurs des revendications 1 à 4, **caractérisée en ce qu'**elle présente un poids par unité de surface de 25 à 300 g/m², de préférence de 60 à 160 g/m².

6. Enveloppe pour produit alimentaire selon une ou plusieurs des revendications 1 à 5, **caractérisée en ce que** le colorant, l'arôme et/ou l'agent de sapidité est une fumée liquide, un arôme de gril, une épice ou un extrait d'épice, de préférence le poivre, la coriandre, le curry ou le paprika ou l'arôme paprika, la cannelle, le caramel, un arôme de fruit ou une marinade.

7. Enveloppe pour produit alimentaire selon une ou plusieurs des revendications 1 à 6, **caractérisée en ce que** le colorant, l'arôme et/ou l'agent de sapidité est associé à un liant ou un mélange de liants.

8. Enveloppe pour produit alimentaire selon la revendication 7, **caractérisée en ce que** le liant est une protéine, de préférence l'albumine, la caséine, la zéine, la protéine de blé, la protéine de soja ou la protéine de pois, ou un polysaccharide ou un dérivé de ceux-ci, de préférence un éther et/ou ester de cellulose, l'acide alginique et/ou un alginate, le chitosane, la pectine, le carraghénane ou l'amidon ou des dérivés d'amidon.

9. Enveloppe pour produit alimentaire selon une ou plusieurs des revendications 1 à 8, **caractérisée en ce qu'**elle comporte au moins un revêtement externe.

10. Enveloppe pour produit alimentaire selon la revendication 9, **caractérisée en ce que** le revêtement externe agit en tant que barrière à l'oxygène et/ou à la vapeur d'eau.

11. Enveloppe pour produit alimentaire selon la revendication 9, **caractérisée en ce que** le revêtement externe comprend une résine acrylate et/ou une résine poly(chlorure de vinylidène) (PVDC).

12. Enveloppe pour produit alimentaire selon la revendication 9, **caractérisée en ce que** pour le revêtement externe on utilise des polymères comportant des motifs d'au moins l'un des monomères suivants : acrylates, méthacrylates, acétate de vinyle, alcool vinylique, éthylène, butadiène, styrène, acide acrylique, acide méthacrylique, acrylamide et/ou acrylonitrile.

13. Enveloppe pour produit alimentaire selon la revendication 9, **caractérisée en ce que** le revêtement (après le séchage) a un poids jusqu' à 150 g/m².

14. Enveloppe pour produit alimentaire selon une ou plusieurs des revendications 8 à 13, **caractérisée en ce que** l'enveloppe présente pour des utilisations pour des saucisses crues une perméabilité à la vapeur d'eau de plus de 150 g/m².d, et pour des utilisations pour des saucisses à bouillir et des saucisses à cuire une perméabilité à la vapeur d'eau allant jusqu'à 150 g/m².d.

15. Enveloppe pour produit alimentaire selon une ou plusieurs des revendications 1 à 14, **caractérisée en ce que** le joint longitudinal est produit par couture, collage et/ou par soudage de bande de scellement.

16. Procédé pour la fabrication d'une enveloppe pour produit alimentaire selon une ou plusieurs des revendications 1 à 15, **caractérisé en ce que**
- on prépare un matériau plat textile en forme de bande,
- on munit éventuellement le matériau plat sur une face d'au moins une couche qui agit en tant que barrière à l'oxygène et/ou à la vapeur d'eau,
et ensuite soit
a)
- sur une face du matériau plat, qui n'est pas munie d'une couche barrière, on applique au moins un colorant, un arôme et/ou un agent de sapidité, qui peut être absorbé, emmagasiné et de nouveau libéré,
- on découpe éventuellement le matériau plat à la largeur convenable,
- on met le matériau plat en forme d'un boyau à bords longitudinaux se chevauchant, de sorte que le colorant, l'arôme et/ou l'agent de sapidité se trouve(nt) sur la face interne du boyau, et
- on fixe les bords se chevauchant avec un joint longitudinal
soit
b)
- on met le matériau plat éventuellement revêtu en forme d'un boyau à bords longitudinaux se chevauchant, de sorte que la couche agissant en tant que barrière à l'oxygène et/ou à la vapeur d'eau se trouve sur la face interne du boyau,
- on fixe les bords se chevauchant avec un joint longitudinal,
- on applique sur la face externe du boyau au moins un colorant, un arôme et/ou un agent de sapidité, qui peut être absorbé, emmagasiné et de nouveau libéré et
- on retourne le boyau.

17. Procédé selon la revendication 16, **caractérisé en ce que** le colorant, l'arôme et/ou l'agent de sapidité est un additif alimentaire solide, de préférence en grains ou en morceaux, qui est associé à un liant ou mélange de liants avant l'application.

18. Utilisation de l'enveloppe pour produit alimentaire selon l'une quelconque des revendications 1 à 15, pour saucisse crue, saucisse à bouillir ou saucisse à cuire cuite ou pour le conditionnement de fromage.
